# EUROPEAN PATENT SPECIFICATION

(11) **EP 3 443 733 B1**
(45) Date of publication and mention of the grant of the patent: **31.03.2021**
(21) Application number: 16716206.4
(22) Date of filing: 13.04.2016
(51) Int. Cl.: H04N 5/225, G03B 17/55, H04N 5/30

(54) **IMAGING DEVICE**
BILDGEBUNGSVORRICHTUNG
DISPOSITIF D'IMAGERIE

(43) Date of publication of application: 20.02.2019
(73) Proprietor: Thales Alenia Space Schweiz AG, 8052 Zürich (CH)
(72) Inventor: MUFF, Reto, 8052 Zürich (CH); HERZOG, Frank, 5232 Villigen (CH)
(74) Representative: Piticco, Lorena
(86) International application number: PCT/EP2016/058126
(87) International publication number: WO 2017/178045

(56) References cited:
- CN-A- 103 616 791
- CN-U- 204 721 440
- US-A1- 2007 290 331
- US-A1- 2014 193 160

## Description

The invention addressed herein relates to an imaging device. Under further aspects, the invention relates to a space vehicle comprising an imaging device, to a method for reducing cooling energy for an imaging device and a method of producing images.

By the term imaging device we refer to devices sensitive to electromagnetic radiation in at least one of the wavelength ranges visible light, infrared, ultraviolet, x-ray or gamma ray, or particle radiation, such as alpha rays, beta rays or cosmic muons, and being able to detect this radiation in a spatially resolved manner. In modern imaging devices a core element of imaging devices is in most cases an image sensor creating electrical output signals depending on the intensity of radiation on individual pixels of the image sensor. In the following we refer to such a 'radiation-electric converting image sensor' shortly as 'image sensor' .

Optics elements, which may be e.g. lenses, mirrors, prisms, gratings or filters - specific to the application in question - may be placed between the source of radiation and the image sensor. Typically, the sensitive pixels of the image sensor are arranged in a two-dimensional array in the so called focal plane of the optics. Known image sensors are implemented e.g. in CCD (charge-coupled device) technology or CMOS (complementary metal-oxide-semiconductor) technology.

An important factor for the quality of the images acquired with such an imaging device is the so called dark current or dark noise. This is a randomly fluctuating electrical signal that is independent of the radiation falling on a given pixel and that originates even from pixels that receive no radiation. It is generally desirable to have very low dark noise. E.g. in the case of astronomical photography, a low intensity signal on a single pixel may be misinterpreted as a faint star. In the case of spectral imaging, the regions of interest are the atomic or molecular absorption lines, i.e. the "dark" pixels. It is known, that dark noise is strongly dependent on the substrate temperature of the image sensor. Therefore, in demanding imaging applications it is common practice to cool image sensors to a temperature considerably less than room temperature. For some special applications, such as for imaging in the far infrared range, cooling the image sensor may even be a prerequisite for the operation of the sensor, because the uncooled sensor itself would be a source of radiation in the wavelength range of interest.

However, in relevant applications demanding highest image quality, such as for imaging devices aboard a space vehicle, the cooling capacity is limited. As a specific example of such an application, the case of an optical spectrometer on a satellite platform is discussed in more detail. The typical operating temperature of the image sensor on a spectral imager is in the range of 210 to 230 K. A typical satellite is built in a way, that it reaches a temperature of around 300 K under nominal operating conditions. Hence, a temperature difference of 80 K exists between the image sensor and its surroundings. Cooling is achieved by radiatively dumping the heat into deep space. This function is carried out by a radiator. The size of the radiator increases with the thermal power that needs to be dumped. For satellite applications, size and weight of the radiator have to be kept in reasonable limits.

In order to operate the imaging device, the electrical signals from the image sensor need to be processed by front-end-electronics, handed over to an instrument controller and to an on-board computer to finally be sent to an earth station via ground link. The combination of a large number of pixels of the image sensor and a high rate of capture lead to high data rates that need to be transmitted.

From CN 204 721 440 U a network camera cover comprising a fiber function module, a waterproof connector, and a network camera is known. The fiber function module includes a circuit board, a fiber transceiver switch being integrated on the circuit board, a network socket and a fiber interface. The waterproof connector is embedded with the optical fiber, wherein the optical fiber is connected to the optical transceiver. The network camera is connected to the network socket of the optical transceiver.

US 2007/290331 A discloses a system and a method of cooling a CCD camera by means of a composite material housing design that allows the cold side of a TEC to be mounted relatively closely to the CCD and the hot side of the TEC to be isolated from the housing cavity in which the CCD resides.

CN 103 616 791 A discloses a control device for a camera lens performing a temperature control by means of a thermal insulation part and a cooling and temperature control part. The former comprises a high-reflectivity metal foil and a low thermal conductivity heat shield, which isolates the heat exchange between the lens and the external environment. The latter uses a temperature sensor to measure the temperature of the lens surface in real time and feeds the measurement result to the temperature controller. The temperature controller adjusts the working state of a cooling fan according to the lens temperature difference.

From US 2014/193160 A1 an optical module for a blade server is known. The module comprises a first circuit board on which a connector socket is mounted, an optical transceiver module that is electrically connected to the first circuit board via the connector socket; a heat sink; and a heat dissipating sheet. The optical transceiver module includes: a second circuit board on which an E/O converter, a drive circuit for the E/O converter, an O/E converter, and a current-to-voltage conversion circuit for the O/E converter are mounted; and an optical waveguide that guides an optical signal generated by the E/O converter to an output end of the optical transceiver module, and that guides an input optical signal to the O/E converter. The heat sink is thermally coupled to the E/O converter, the drive circuit, the O/E converter, and the current-to-voltage conversion circuit via the heat dissipating sheet, and presses the optical transceiver module onto the first circuit board.

The object of the present invention is, in case of a satellite application, to reduce radiator size and weight and more generally to reduce the cooling power needed to cool the image sensor.

This object is achieved by an imaging device according to claim 1.

It has been recognized by the inventors, that it is highly desirable to keep thermal flux to the image sensor low. The imaging device according to the present invention surprisingly provides means to transmit signals at high data rates between a cold image sensor and a warm electronics assembly in a way that keeps thermal flux to the image sensor low.

A particular advantage of the imaging device according to the invention is, that the optical output signals can be transmitted through media that have low thermal conductivity. Suitable media are e.g. vacuum, air and various solid dielectrics, such as glass and transparent polymers. The optical signals can be transmitted through vacuum, gas or transparent solids, either through free space or guided by reflecting surfaces. The optical signals emitted by the electro-optical converter are received by a receiver on the warm side. Therefore, with the imaging device according to the invention it is possible to thermally insulate the image sensor to quite a high degree. An implementation of the connections for transmission of data by electrical conductors that are at the same time good thermal conductors is avoided. The number of electric conductors that connect the cold image sensor to warm electronics and exhibit heat current towards the sensor are reduced to a minimum, e.g. to a pair of power supply lines. Materials with low thermal conductivity, such as polymers, in particular polymer foams, or glass wool may be used to build the barrier, such that it is thermally insulating. Heat transfer may occur to an outer layer of the barrier facing a warm surrounding of the imaging device. The barrier, being itself a part of the imaging device, impedes heat transfer to the other parts of the imaging device. The surface may be heat reflecting.

At least a part of the barrier is formed as an evacuated space. This way, at least in said part the conductive and convective heat transfer are reduced to a minimum. A radiation shield may belong to the barrier such that heat transfer by thermal radiation is impeded. Generally, increasing the spatial distance between the cooled image sensor and warm electronics and other warm parts in the surrounding helps to impede heat transfer towards the image sensor. During operation of the imaging device, the barrier in combination with the cooling arrangement allows to maintain a temperature difference between a cold side and a warm side of the barrier, the cold side of the barrier including the image sensor.

Depending on the type of radiation to be detected by the imaging device, an optics arrangement may be operationally connected to the radiation input. The radiation input may simply be a pinhole or a slit being transparent for the radiation in question. Means establishing the operational connection between the electrical interface of the image sensor and the electrical input of the electro-optical converter may comprise electrically conductive wires and integrated circuits, e.g. for amplification of signals, conversion from analog to digital or for conversion of parallel to serial signals.

Further embodiments are disclosed in the claims 2 to 11.

In one embodiment of the imaging device according to the invention, which may be combined with any of the embodiments still to be addressed unless in contradiction, the barrier comprises a multi-layer insulation.

Such a multi-layer insulation creates a highly thermally insulating barrier and thus prevents heat transfer to the imaging device. It comprises e.g. at least one metal coated plastic foil stacked over other layers e.g. spaced by a netlike fabric of glass fibers or polymer fibers. Such a multi-layer insulation is able to reduce heat transfer by thermal radiation significantly and is most effective when used in vacuum or low pressure atmosphere, where there is no heat transport by convection.

In another embodiment of the imaging device according to the invention, which may be combined with any of the preaddressed embodiments and with any of the embodiments still to be addressed, unless in contradiction, the image sensor is an active pixel sensor.

Active pixel sensor have the advantage that they can be controlled by a few digital signals and do - in contrast to CCD sensors - not need powerful electronics for image readout as each pixel comprises an amplifier. Therefore, they are well suited to be used in an imaging device according to the invention. Active pixels sensors may be implemented in CMOS technology.

In another embodiment of the imaging device according to the invention, which may be combined with any of the preaddressed embodiments and with any of the embodiments still to be addressed, unless in contradiction, the image sensor comprises an on-chip analog-to-digital converter. With this embodiment, one may directly handle digital signal output of the image sensor.

In another embodiment of the imaging device according to the invention, which may be combined with any of the preaddressed embodiments and with any of the embodiments still to be addressed, unless in contradiction, the cooling arrangement comprises at least one of
- a radiator element
- a heat exchanger
- a heat pump
- a thermo-electric cooler.

A radiator element is suited for space applications. For a satellite the only possibility to get rid of thermal energy is radiative dumping into deep space. The radiator element is constructed such that its emissivity is high. A heat exchanger can be applied, if a cooled fluid - a liquid or a gas - is available. With a flow of the fluid through the heat exchanger heat is carried away convectively, whereby an efficient heat transfer to the fluid takes place at the heat exchanger. Such a heat exchanger could e.g. be placed at the backside of the image sensor. To achieve a temperature below 0°C, nitrogen, helium, ammonia, hydrocarbons or fluorocarbons may be used as fluids. A heat pump, as is used in a refrigerator, uses e.g. electrical energy to transfer heat from a cold to a warm side. A thermo-electric cooler is a special heat pump that makes use of the Peltier effect. It has no moving parts, can be built very compact and in a form matching the shape of the image sensor. Therefore, a thermo-electric cooler can be attached directly to the backside of the image sensor in order to cool the image sensor. A combination of several of the listed elements in a cooling arrangement may be useful, as e.g. a Peltier thermo-electric cooler covering the back side of the image sensor and a radiator element of a satellite, which is thermally connected to the warm side of the thermoelectric cooler by a metallic connecting element.

In another embodiment of the imaging device according to the invention, which may be combined with any of the preaddressed embodiments and with any of the embodiments still to be addressed, unless in contradiction, the electro-optical converter comprises a modulateable light source, as e.g. a modulateable laser - or light emitting diode - source, preferably a directly driven multimode vertical cavity surface emitting laser (VCSEL) or a light emitting diode (LED).

In this embodiment, the intensity of the light emitted by the light source is pulse modulated and/or amplitude modulated according to the electrical signal at the input of the electro-optical converter. The preferred variants VCSEL and LED react very fast and therefore allow very high data transmission rates.

In another embodiment of the imaging device according to the invention, which may be combined with any of the preaddressed embodiments and with any of the embodiments still to be addressed, unless in contradiction, the imaging device comprises at least one optical waveguide operationally connected to said optical output.

An optical waveguide can e.g. have the form of an optical fiber or a rectangular waveguide and can e.g. be made of glass, a polymer or a semiconductor material. It guides electromagnetic waves in its interior exploiting total internal reflection. To achieve total internal reflection, the index of refraction (dielectric index) of a middle layer of the waveguide is higher than the index of refraction of outer layers. By using an optical waveguide it is possible to guide the optical output signals of the electro-optical converter with low loss to a defined position on the warm side of the imaging device. The path of the waveguide may contain curves and the waveguide may be fed trough small holes, e.g. through the barrier.

In another embodiment of the imaging device according to the invention, which may be combined with any of the preaddressed embodiments and with any of the embodiments still to be addressed, unless in contradiction, the at least one optical waveguide is integrated in a printed circuit board.

The printed circuit board can be rigid or flexible. Glass fiber optical waveguides can be integrated into a printed circuit board. Siloxane-based polymers can e.g. be patterned by reactive ion edge or exposure to ultraviolet and serve as waveguide on a flexible printed circuit board. The advantage of this embodiment is that electro-optical converters, opto-electrical converters can be mounted and electrically connected on the same printed circuit board that has the optical waveguide integrated. This allows precise positioning of electronics elements with respect to the optical waveguide and highly compact construction.

In another embodiment of the imaging device according to the invention, which may be combined with any of the preaddressed embodiments and with any of the embodiments still to be addressed, unless in contradiction, the electro-optical converter comprises a modulator for input light from said optical waveguide, preferably a silicon photonics based modulator.

With this embodiment, the light source is e.g. operated continuously, which eliminates the need for light sources having fast switching time. The modulator provides the high bandwidth. Light modulators typically have very high bandwidth and in combination with a serializer, a modulator enables to send all data acquired by the image sensor over a single optical channel. A serializer integrated circuit may be part of the means operationally connecting the electrical interface of the image sensor to the electrical input of the electro-optical converter.

In a variation of the embodiment, the input light is guided to the modulator by means of a second optical waveguide being operationally connected to a light source on the side of the barrier opposite to the modulator.

In this embodiment, the light source is mounted on the end of the data transmission means, which is distant from the cooled image sensor, i.e. on the warm side of the barrier. Light sources, such as laser diodes, produce heat. In this embodiment this heat is dissipated on the warm side and does not add to the cooling power needed to cool the image sensor.

In another embodiment of the imaging device according to the invention, which may be combined with any of the preaddressed embodiments and with any of the embodiments still to be addressed, unless in contradiction, an opto-electric converter, preferably a photodiode connected to a transimpedance amplifier, is operationally connected to an output of the at least one optical waveguide.

The invention is further directed to a space vehicle comprising an imaging device according to the invention.

In operation, elements of a space vehicle may be surrounded by vacuum, such that heat transfer by convection of air is eliminated, whereas heat transfer through vacuum by thermal radiation is still possible. With the present invention heat transfer to a cooled image sensor of an imaging device aboard a space vehicle by thermal conduction and thermal radiation are minimized. This way the heat flux to be carried away from the image sensor is minimized. In a case, where the available cooling power is given by external limiting factors, e.g. the maximum size of a radiator or the maximum electric power available for a heat pump, an imaging device according to the invention allows to reach a lower temperature of the image sensor.

Further in claim 13 the present invention addresses a method of reducing cooling energy for an imaging device as claimed in claim 1 having an image sensor and a cooling arrangement thermally coupled to the image sensor, the method comprising the steps of
- blocking heat transfer by the barrier from a surrounding of the imaging device towards the image sensor and
- optically transmitting signals representing image data acquired by means of said image sensor through the barrier to a receiver located in said surrounding.

The imaging device according to the invention provides all the necessary means to carry out said method. Specifically, an electro-optical converter is used to optically transmit signals to a receiver located in the surrounding of the imaging device.

The invention is further directed to a method of producing images by means of the preaddressed method.

By using this method, high quality images containing little noise are produced.

Turning back to the signal paths connected to the image sensor we note, that in addition to the signals to be sent from the image sensor to another electronics assembly, there may be a need to transmit signals to the image sensor, such as a clock signal, trigger signals or control signals e.g. from a serial interface. These signals may be transmitted in a similar manner as the signals representing image data, but with reversed locations of transmitter and receiver with respect to the cold and warm sides of the optical transmission path and may be transmitted optically as well. Control signals may be transmitted through a waveguide. By applying a bidirectional operation mode control signals may even be transmitted through a waveguide that is used for transmission of signals representing image data coming from the image sensor.

The imaging device comprises several elements that consume electrical power. This electrical power may be provided by a battery and/or a solar panel. As an alternative, power lines may be fed trough or around the barrier providing the imaging device with electrical power from a source arranged on the warm side of the barrier. In this case, long electrical wires with small cross-section are preferred to keep heat transfer through the power lines on a low level.

The invention shall now be further exemplified with the help of figures. The figures show:
Fig. 1 a schematic and simplified view of the core elements of the imaging device according to the invention;
Fig. 2 a schematic, partially perspective view of an embodiment of the imaging device;
Fig. 3 a schematic view of a possible way to integrate an optical waveguide into an embodiment of the imaging device;
Fig. 4 a schematic view of an alternative way to integrate an optical waveguide into an embodiment of the imaging device.

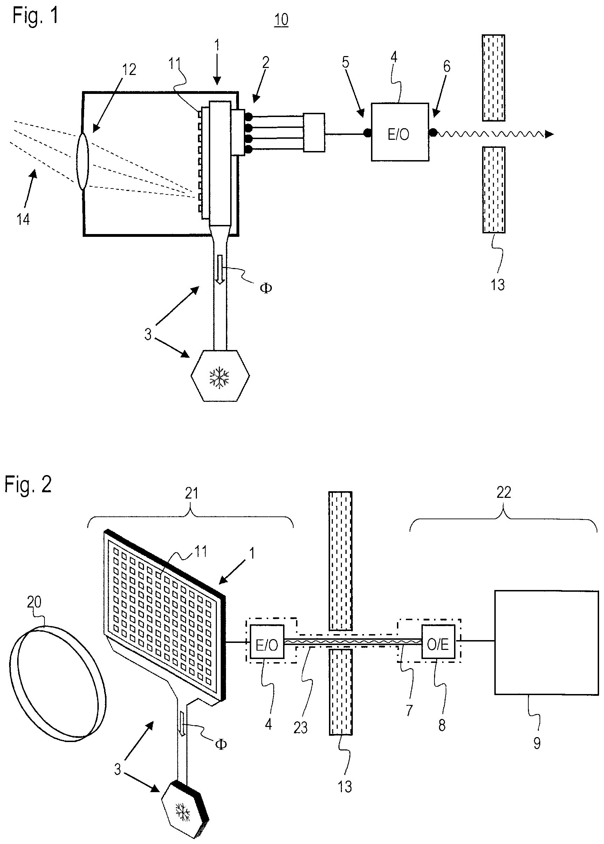

Fig. 1 shows schematically and simplified, the core elements of an imaging device 10 according to the invention. Incident radiation 14 enters through a radiation input 12 and is detected on pixels 11 of an image sensor 1. The image sensor 1 is thermally coupled to a cooling arrangement 3 that creates a heat flux Φ away from the image sensor 1. The cooling arrangement comprises parts that have high thermal conductivity and an element that during operation reaches lower temperature than the image sensor. This way, a thermal gradient is created that drives a heat flux away from the image sensor and towards the element with lower temperature. The image sensor has an electric interface 2. Electrical signals representing image data are provided at this interface. The electrical interface 2 is operationally connected to an input 5 of an electro-optical converter 4. The operational connection or the interface 2 may involve transformations of the signals, such as from parallel to serial. The hardware implementation of this operational connection may, depending on the interface 2, comprise a number of electrical conductor paths. An interface may e.g. comprise 12 conductor paths for digital data transmission, 8 additional conductor paths carrying digital control signals as well as a ground plane on a print and possibly also shielding layers. The electro-optical converter 4 generates optical output signals as a function of the electrical signals at the input of the electro-optical converter. The optical output signals, which represent image data, are emitted at an optical output 6. The optical output signals are indicated by wavy lines. The optical output may comprise more than one signal channel. Several optical signal channels may be spatially separated and/or may be multiplexed to several wavelengths by applying the well-known method called wavelength-division multiplexing. Downstream the optical output a barrier 13 is arranged. This barrier is thermally insulating and prevents heat transfer from the uncooled surroundings to the imaging device and especially to the image sensor 1.

Fig. 2 shows a schematic, partially perspective view of an embodiment of the imaging device in the context of neighboring elements. Optics 20 are arranged in front of the image sensor 1. Optics may comprise lenses in the case of imaging in the visible or infrared wavelength range. A housing, not shown in this figure as not to block sight on the elements, may enclose the image sensor, only leaving open an entrance for radiation through the optics. The image sensor comprises an array of sensitive pixels. An individual pixel is marked by the reference sign 11. To simplify matters, an array of 9 x 12 pixels is shown. In realistic applications, arrays of e.g. 2000 x 3000 pixels or more are common. Signals representing image data are transmitted to an electro-optical converter 4. The optical output signal of the electro-optical converter 4 is coupled into an optical waveguide 7. At the opposite end of the optical waveguide 7 the optical output signal is converted by an opto-electrical converter 8 into electrical signals again. These electrical signals a further processed in an electronics assembly 9. During operation of the imaging device, the image sensor 1 and the electro-optic converter 4 are on a cold side 21, whereas the electronics assembly 9 and the opto-electric converter 8 are on a warm side 22. The barrier 13 thermally insulates the cold side from the warm side such that a temperature gradient between the two sides can be upheld. The waveguide 7 is fed through the barrier. The electronics assembly 9 may - depending on the application - comprise front end electronics e.g. implemented as field-programmable gate array (FPGA), a memory module as well as further components for control of the imaging device, for data processing, for mass storage of data and for transmission of data. The optical waveguide 7 may be embedded in a printed circuit board 23, which is indicated by dash-dotted contours. In the embodiment shown in Fig. 2, the electro-optical converter 4 and the opto-electrical converter 8 are placed on this printed circuit board 23, too.

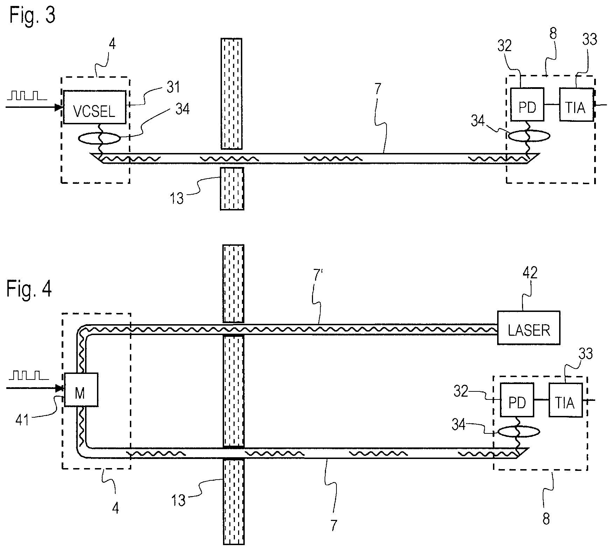

Fig. 3 shows a detailed view of a possible implementation of the electro-optical converter in the case of an embodiment involving an optical waveguide. In addition, the receiver side with an opto-electrical converter is shown as well. The electro-optical converter 4 receives electrical signals that directly drive a vertical cavity surface emitting laser (VCSEL) 31. The intensity of the light emitted by the laser is modulated according to the electrical signal at the input of the electro-optical converter. The light is focused by a lens 34 and coupled into the optical waveguide 7. At the opposite end of the waveguide several elements form an opto-electrical converter 8. There, the light is coupled out of the optical waveguide and focused on a photodiode 32 by another lens 34. A transimpendance amplifier 33 converts the small current of the photodiode to a voltage that can be used to drive further electronic components (not shown). The optical waveguide may be embedded in a printed circuit board and the electronic components and lenses may be placed on this printed circuit board. The optical waveguide 7 is fed through the thermally insulating barrier 13.

Fig. 4 shows a detailed view of another possible implementation of the electro-optical converter in the case of an embodiment involving an optical waveguide. Different from the implementation shown in fig. 3, the electro-optical converter 4 here is a modulator 41 connected in series with the optical waveguides 7 and 7' both crossing the barrier 13. A continuously operated laser 42 provides light at the modulator. This light is indicated by continuous wavy lines. It is guided to the modulator by means of a second waveguide 7'. This light is modulated according to the electrical signal at the input of the electro-optical converter as indicated by interrupted wavy lines in the waveguide 7. At the receiver side of the optical waveguide an opto-electrical converter 8 is arranged, the opto-electrical converter comprising a lens 34, a photodiode 32 and a transimpedance amplifier 33. In the embodiment shown here, the laser 42 being the source of light is not placed on the transmitter side, but rather on the receiver side of the barrier 13. This configuration is advantageous if the electro-optical converter is on the cold side of the barrier 13. In this case, only the heat dissipated by the modulator 41 adds to the cooling power needed and the laser, also dissipating heat, is well insulated from the cold side. The optical waveguide may be embedded in a printed circuit board and the electronic components and lenses may be placed on this printed circuit board.

### List of reference signs

- 1: image sensor
- 2: electrical interface (of image sensor)
- 3: cooling arrangement
- 4: electro-optical converter
- 5: electrical input (of electro-optical converter)
- 6: optical output (of electro-optical converter)
- 7: optical waveguide
- 7': second optical waveguide
- 8: opto-electric converter
- 9: electronics assembly
- 10: imaging device
- 11: pixel
- 12: radiation input
- 13: barrier (thermal insulation)
- 14: incident radiation
- 20: optics
- 21: cold side
- 22: warm side
- 23: printed circuit board
- 31: vertical-cavity surface-emitting laser (VCSEL)
- 32: photodiode
- 33: transimpedance amplifier (TIA)
- 34: lens
- 41: modulator
- 42: laser
- Φ: heat flux

## Claims

1. Imaging device (10) comprising
- a radiation input (12),
- a radiation-electric converting image sensor (1) the input thereof being operationally connected to said radiation input (12) and having an electrical interface (2) with an output providing electrical output signals representing image data,
- an electro-optical converter (4) with an electrical input (5) operationally connected to said output of said electrical interface (2) and with an optical output (6), generating from said electrical output signals optical output signals representing said image data, and
- a cooling arrangement (3) thermally coupled to the image sensor (1),
wherein the imaging device (10) further comprises a barrier (13) downstream said optical output (6) and tailored so as to impede heat transfer towards the image sensor (1), wherein said barrier (13) is thermally insulating, and wherein the optical output signals are transmitted through said barrier (13) **characterized in that** at least part of the barrier (13) is formed as an evacuated space.

2. Imaging device (10) according to claim 1, wherein the barrier (13) comprises a multi-layer insulation.

3. Imaging device (10) according to claim 1 or 2, wherein the image sensor (1) is an active pixel sensor.

4. Imaging device (10) according to any one of the claims 1 to 3, wherein the image sensor (1) comprises an on-chip analog-to-digital converter.

5. Imaging device (10) according to any one of the claims 1 to 4, wherein the cooling arrangement (3) comprises at least one of
- a radiator element
- a heat exchanger
- a heat pump
- a thermo-electric cooler.

6. Imaging device (10) according to any one of the claims 1 to 5, wherein the electro-optical converter (4) comprises a modulateable light source, preferably a directly driven multimode vertical cavity surface emitting laser (VCSEL) or a light emitting diode (LED).

7. Imaging device (10) according to any one of the claims 1 to 6, comprising at least one optical waveguide (7) operationally connected to said optical output.

8. Imaging device (10) according to claim 7, wherein the at least one optical waveguide (7) is integrated in a printed circuit board (23).

9. Imaging device (10) according to claim 7 or 8, wherein the electro-optical converter (4) comprises a modulator (41) for input light, preferably a silicon photonics based modulator.

10. Imaging device (10) according to claim 9, wherein the input light is guided to the modulator (41) by means of a second optical waveguide (7') being operationally connected to a light source on the side of the barrier (13) opposite to the modulator (41).

11. Imaging device (10) according to any one of the claims 7 to 10, wherein an opto-electric converter (8), preferably a photodiode (32) connected to a transimpedance amplifier (33), is operationally connected to an output of the at least one optical waveguide (7).

12. Space vehicle comprising an imaging device according to any one of the claims 1 to 11.

13. A method of reducing cooling energy for an imaging device (10) as claimed in any one of claims 1 to 11, the method comprising the steps of
- blocking heat transfer by the barrier from a surrounding of the imaging device towards the image sensor (1) and
- optically transmitting signals representing image data acquired by means of said image sensor (1) through the barrier to a receiver located in said surrounding.

14. Use of the method according to one of claims 13 to produce images by means of the imaging device according to any one of the claims 1 to 11.

## Patentansprüche

1. Bildgebungsvorrichtung (10) umfassend
- einen Strahlungseingang (12),
- einen strahlungselektrischen Umwandlungsbildsensor (1), dessen Eingang betriebsmässig mit dem Strahlungseingang (12) verbunden ist und eine elektrische Schnittstelle (2) mit einem Ausgang, der elektrische Ausgangssignale bereitstellt, die Bilddaten darstellen, umfasst,
- einen elektro-optischen Wandler (4) mit einem elektrischen Eingang (5), der betriebsmässig mit dem Ausgang der elektrischen Schnittstelle (2) verbunden ist und mit einem optischen Ausgang (6), der aus den elektrischen Ausgangssignalen optische Ausgangssignale erzeugt, die Bilddaten darstellen, und
- eine Kühlanordnung (3), die thermisch mit dem Bildsensor (1) gekoppelt ist,
wobei die Bildgebungsvorrichtung (10) weiter eine Barriere (13) umfasst, die dem optischen Ausgang (6) nachgeschaltet ist und ausgebildet ist, eine Wärmeübertragung in Richtung des Bildsensors (1) zu verhindern, wobei die Barriere (13) thermisch isolierend ist, und wobei die optischen Ausgangssignale durch die Barriere (13) übertragen werden,
**dadurch gekennzeichnet, dass** mindestens ein Teil der Barriere (13) als evakuierter Raum ausgebildet ist.

2. Bildgebungsvorrichtung (10) gemäss Anspruch 1, wobei die Barriere (13) eine mehrschichtige Isolierung umfasst.

3. Bildgebungsvorrichtung (10) gemäss Anspruch 1 oder 2, wobei der Bildsensor (1) ein aktiver Pixelsensor ist.

4. Bildgebungsvorrichtung (10) nach einem der Ansprüche 1 bis 3, wobei der Bildsensor (1) einen On-Chip-Analog-Digital-Wandler umfasst.

5. Bildgebungsvorrichtung (10) nach einem der Ansprüche 1 bis 4, wobei die Kühlanordnung (3) mindestens eines des Folgenden umfasst:
- ein Strahlerelement
- einen Wärmetauscher
- eine Wärmepumpe
- einen thermoelektrischen Kühler.

6. Bildgebungsvorrichtung (10) nach einem der Ansprüche 1 bis 5, wobei der elektro-optische Wandler (4) eine modulierbare Lichtquelle, vorzugsweise einen direkt angesteuerten Multimode-Vertical-Cavity-Surface-Emitting-Laser (VCSEL) oder eine Leuchtdiode (LED), umfasst.

7. Bildgebungsvorrichtung (10) nach einem der Ansprüche 1 bis 6, umfassend mindestens einen Lichtwellenleiter (7), der betriebsmässig mit dem optischen Ausgang verbunden ist.

8. Bildgebungsvorrichtung (10) nach Anspruch 7, wobei der mindestens eine Lichtwellenleiter (7) in eine Leiterplatte (23) integriert ist.

9. Bildgebungsvorrichtung (10) nach Anspruch 7 oder 8, wobei der elektro-optische Wandler (4) einen Modulator (41) für Eingangslicht, vorzugsweise einen Modulator auf Silizium-Photonik-Basis, umfasst.

10. Bildgebungsvorrichtung (10) nach Anspruch 9, wobei das Eingangslicht mittels eines zweiten Lichtwellenleiters (7'), der betriebsmässig mit einer Lichtquelle auf einer dem Modulator (41) gegenüberliegenden Seite der Barriere (13) verbunden ist, zum Modulator (41) geleitet wird.

11. Bildgebungsvorrichtung (10) nach einem der Ansprüche 7 bis 10, wobei ein opto-elektrischer Wandler (8), vorzugsweise eine Fotodiode (32), die mit einem Transimpedanzverstärker (33) verbunden ist, mit einem Ausgang des mindestens einen Lichtwellenleiters (7) betriebsmässig verbunden ist.

12. Raumfahrzeug umfassend eine Bildgebungsvorrichtung nach einem der Ansprüche 1 bis 11.

13. Verfahren zur Reduzierung von Kühlenergie für eine Bildgebungsvorrichtung (10) gemäss einem der Ansprüche 1 bis 11, wobei das Verfahren die Schritte umfasst von
- Blockieren der Wärmeübertragung durch die Barriere aus einer Umgebung der Bildgebungsvorrichtung in Richtung des Bildsensors (1) und
- optisches Übertragen von Signalen, die mittels des Bildsensors (1) erfasste Bilddaten darstellen, durch die Barriere (13) an einen Empfänger, der sich in der der genannten Umgebung befindet.

14. Verwendung des Verfahrens nach Anspruch 13 zur Erzeugung von Bildern mittels der Bildgebungsvorrichtung nach einem der Ansprüche 1 bis 11.

## Revendications

1. Dispositif d'imagerie (10) comprenant
- une entrée de rayonnement (12),
- un capteur d'image à conversion électrique de rayonnement (1) dont l'entrée est connectée fonctionnellement à ladite entrée de rayonnement (12) et ayant une interface électrique (2) avec une sortie fournissant des signaux de sortie électriques représentant des données d'image,
- un convertisseur électro-optique (4) avec une entrée électrique (5) connectée fonctionnellement à ladite sortie dudit interface électrique (2) et avec une sortie optique (6), générant à partir desdits signaux de sortie électriques des signaux de sortie optiques représentant lesdites données d'image, et
- un agencement de refroidissement (3) couplé thermiquement au capteur d'image (1), dans lequel le dispositif d'imagerie (10) comprend en outre une barrière (13) en aval de ladite sortie optique (6) et adaptée de sorte à empêcher le transfert thermique vers le capteur d'image (1), dans lequel ladite barrière (13) est thermiquement isolante, et dans lequel les signaux de sortie optiques sont transmis à travers ladite barrière (13) **caractérisé en ce que** au moins une partie de la barrière (13) est formée comme espace évacué.

2. Dispositif d'imagerie (10) selon la revendication 1, dans lequel la barrière (13) comprend une isolation multicouche.

3. Dispositif d'imagerie (10) selon la revendication 1 ou 2, dans lequel le capteur d'image (1) est un capteur de pixel actif.

4. Dispositif d'imagerie (10) selon l'une quelconque des revendications précédentes, dans lequel le capteur d'image (1) comprend un convertisseur analogique-numérique sur puce.

5. Dispositif d'imagerie (10) selon l'une quelconque des revendications 1 à 4, dans lequel le dispositif de refroidissement (3) comprend au moins l'un parmi
- un élément radiateur
- un échangeur de chaleur
- une pompe à chaleur
- un refroidisseur thermoélectrique.

6. Dispositif d'imagerie (10) selon l'une quelconque des revendications 1 à 5, dans lequel le convertisseur électro-optique (4) comprend une source de lumière modulable, de préférence un laser à cavité verticale émettant par la surface multimode à entrainement direct (VCSEL) ou une diode électroluminescente (LED).

7. Dispositif d'imagerie (10) selon l'une quelconque des revendications 1 à 6, comprenant au moins un guide d'ondes optique (7) connecté fonctionnellement à ladite sortie optique.

8. Dispositif d'imagerie (10) selon la revendication 7, dans lequel le au moins un guide d'ondes optique (7) est intégré dans une carte de circuit imprimé (23).

9. Dispositif d'imagerie (10) selon la revendication 7 ou 8, dans lequel le convertisseur électro-optique (4) comprend un modulateur (41) pour la lumière d'entrée, de préférence un modulateur à base de photonique au silicium.

10. Dispositif d'imagerie (10) selon la revendication 9, dans lequel la lumière d'entrée est guidée vers le modulateur (41) au moyen d'un second guide d'ondes optique (7') étant connecté fonctionnellement à une source de lumière du côté de la barrière (13) opposée au modulateur (41).

11. Dispositif d'imagerie (10) selon l'une quelconque des revendications 7 à 10, dans lequel un convertisseur opto-électrique (8), de préférence une photodiode (32) connectée à un amplificateur à trans-impédance (33), est connecté fonctionnellement à une sortie de l'au moins un guide d'ondes optique (7).

12. Véhicule spatial comprenant un dispositif d'imagerie selon l'une quelconque des revendications 1 à 11.

13. Un procédé de réduction d'énergie de refroidissement pour un dispositif d'imagerie (10) comme revendiqué dans l'une quelconque des revendications 1 à 11, le procédé comprenant les étapes de:
- bloquer le transfert de chaleur par la barrière à partir d'un environnement du dispositif d'imagerie vers le capteur d'image (1) et
- émettant optiquement des signaux représentant des données d'image acquises au moyen dudit capteur d'image (1) à travers la barrière vers un récepteur situé dans ledit environnement.

14. Utilisation du procédé selon une des revendications 13 à pour produire des images au moyen du dispositif d'imagerie selon l'une quelconque des revendications 1 à 11.
